# EUROPÄISCHE PATENTANMELDUNG

(11) **EP 1 671 537 A1**
(43) Veröffentlichungstag der Anmeldung: **21.06.2006**
(21) Anmeldenummer: 05016234.6
(22) Anmeldetag: 26.07.2005
(51) Int. Cl.: A01K 1/015, A01K 1/01

(54) **Bodensystem zur Tierhaltung**

(30) Priorität: 20.12.2004 DE 202004019633 U
(71) Anmelder: Ziegler, Tilman, 84529 Tittmoning (DE)
(72) Erfinder: Ziegler, Tilman, 84529 Tittmoning (DE)
(74) Vertreter: Grünecker, Kinkeldey, Stockmair & Schwanhäusser Anwaltssozietät

(57) **Zusammenfassung**

Die Erfindung betrifft ein Bodensystem zur Tierhaltung mit einem tragfähigen Stahl- und Bodensystem mit einer über dem Boden angeordneten länglichen bahnförmigen Auflage (10,11) aus einem nachgiebigem elastischem Material. Der weiche Untergrund sorgt für ein höheres Wohlbefinden der Tiere und eine verringerte Krankheitsanfälligkeit im Bereich der Klauen oder Hufe. Durch Verwendung einer länglichen bahnförmigen Auflage ist eine bessere Stabilität der Auflage in sich gewährleistet. Die Erfindung beinhaltet weiterhin einen Schmutzräumer (20), bei dem innefialb der Räumschilder (21,22) Ausnehmungen (25,26) entsprechend der Breite und Höhe der bahnförmigen Auflage vorgesehen sind. Dadurch wird eine Beschädigung der bahnförmigen Auflage zuverlässig vermieden.

## Beschreibung

Die Erfindung betrifft ein Bodensystem zur Tierhaltung, das insbesondere für die Verwendung in Ställen zur Haltung schwergewichtiger Klauentiere, insbesondere von Rindern, geeignet ist.

Tierställe herkömmlicher Art weisen einen festen, zumeist aus Beton gefertigten Boden auf, um genügend Stabilität und Widerstand gegen die hohe Belastung durch die Klauen der zum Teil sehr schwergewichtigen Tiere, insbesondere bei Rindern, zu schaffen. Böden in Tierställen weisen zudem Spalten und angeschlossene Abfluss- oder Abräumsysteme zur Entsorgung des anfallenden Schmutzes und Tiermistes auf.

Im Rahmen einer modernen Tierhaltung wird auf eine tierschonende und gesunde Unterbringung in den Ställen Wert gelegt. Eine möglichst artgerechte und schonende Haltung der Tiere ist nicht nur aus Gründen des Tierschutzes, sondern auch aus wirtschaftlichen Gründen im Zusammenhang mit einer Erhöhung der Erträge bei einem gesunden Tierbestand wünschenswert.

Aus diesen Gründen werden in Tierställen in letzter Zeit vermehrt Gummimatten ausgelegt, die durch die nachgiebige und dämpfende Materialeigenschaft sich für die Haltung von schwergewichtigen Klauentieren als vorteilhaft erwiesen haben. Es wurden bisher miteinander verzahnte Einzelmatten verwendet, die zusätzlich am darunter liegenden harten Boden befestigt wurden. Dennoch hat sich gezeigt, dass im Alltag eine Fixierung dieser Matten sehr schwierig ist, insbesondere diese durch Klauentiere mit Gewichten von 500 bis 1000 kg belastet werden. Sowohl was die Fixierung der Matten als solche am Untergrund betrifft, als auch was das Verschieben einzelner Matten zueinander und das Aufstehen der Randkanten bzw. Ecken der Matten betritt, tritt insbesondere bei der hohen Belastung durch Rinderhaltung ein Problem auf.

Vor diesen Hintergrund ist es eine Aufgabe der Erfindung, in für die Unterbringung und Haltung von Tieren vorgesehenen Ställen, die zur schonenden und artgerechten Haltung und zur Erzielung einer erhöhten Gesundheit der Tiere mit nachgiebigen elastischen Auflagen ausgestattet sind, eine leichtere und zuverlässigere Fixierung der Auflagen zu erreichen.

Diese Aufgabe wird erfindungsgemäß gelöst durch ein Bodensystem zur Tierhaltung mit einem tragfähigen starren Boden und einer über dem Boden angeordneten länglichen bahnförmigen Auflage aus einem nachgiebigen, elastischen Material.

Durch die Verwendung eines elastischen, weichen Materials in einer länglichen bahnförmigen Auflage können die Tiere vom harten Untergrund auf die weichere, nachgiebige und elastische Auflage ausweichen, was zu einer deutlichen Verbesserung der Krankheits- und Verletzungsanfälligkeit, insbesondere der Klauen von Rindern, führt. Die moderne Tierhaltung erlaubt den Tieren, innerhalb des Stalls in begrenzten Bereichen frei zu laufen, anstatt wie früher an einem festen Platz, beispielsweise durch Anbinden, lokalisiert zu sein. Die Tiere erkennen den weicheren und elastischen Untergrund gegenüber dem harten Stallunterboden, der zumeist aus Beton ist, und wechseln von sich aus auf die Auflage aus weichem, elastischen Material über, was somit von selbst zur Verbesserung der Situation in bezug auf die Anfälligkeit der Klauen der Tiere führt. Da die Auflage aus weichem nachgiebigem Material als längliche großflächige Bahn ausgelegt ist, ist im Gegensatz zu kleineren, am Unterboden befestigten oder miteinander verzahnten Flächenelementen ein gegenseitiges Verrutschen oder Aufstellen der Ecken nicht zu befürchten.

In einer vorteilhaften Ausführungsform umfasst die Auflage aus elastischem nachgiebigem Material Gummi. Durch die Verwendung von Gummi wird einerseits die gute Verarbeitbarkeit und Herstellbarkeit, zum anderen die erforderliche mechanische Belastbarkeit erzielt. Gummi besitzt zudem die für die Verwendung in Ställen vorteilhafte Eigenschaft, dass Verschmutzungen im Wesentlichen nicht in das Material eindringen und leicht durch Abschaben oder Abspülen entfernbar sind. Dies stellt für die Verwendung in Tierställen einen wichtigen Vorteil dar.

In einer weiteren vorteilhaften Ausführungsform besitzt die Auflage aus elastischem nachgiebigen Material eine Dicke von 10 bis 22 mm, vorzugsweise 14 bis 16 mm, besonders bevorzugt von ca. 15 mm. Diese geringe Dicke, die in Verbindung mit der Ausführung als durchgehende lange Auflage realisierbar ist, ist ausreichend für eine zuverlässige Fixierung der Auflage, ohne dass der darunterliegende Boden eine besondere Formgebung aufweisen muss. Die geringe Dicke verhindert, dass an den Rändern ungeeignet hohe Stoßkanten entstehen. Stoßkanten von unter 20 mm an den Rändern sind insbesondere günstig, da die Tiere beim Gehen auf die Auflagen seltener an den Kanten mit den Klauen anstoßen, die Kanten somit weniger beschädigen oder abtreten, und die Kanten aufgrund ihrer geringeren Höhe insgesamt in sich eine bessere Stabilität aufweisen und daher für Beschädigungen generell weniger anfällig sind.

In einer weiteren bevorzugten Ausführungsform des Bodensystems gemäß der vorliegenden Erfindung ist eine Räumvorrichtung mit einem Schmutzräumer mit einem Räumschild und einem Bewegungsmechanismus zur Bewegung des Räumschilds entlang der Länge der bahnförmigen Auflage vorgesehen. Mittels der entlang der Länge der bahnförmigen Auflage fahrenden Räumvorrichtung wird die Auflage von Schmutz und Tiermist befreit. Durch den integrierten Bewegungsmechanismus erfolgt die Räumung und Entmistung der Auflage automatisch.

Mit einer bevorzugten Ausführungsform weist der Räumschild eine untere Räumkante auf, die wenigstens eine, in ihrem Querschnitt im Wesentlichen die Form eines langgestreckten Rechtecks aufweisende Ausnehmung, die der Querschnittsform der Auflage entspricht, aufweist. Aufgrund der an die Breite der Auflage aus nachgiebigem elastischem Material angepasste Ausnehmung im Räumschild wird eine Beschädigung der Auflage weitgehend verhindert. Auch wenn Auflagen aus Gummi eine relativ hohe mechanische Stabilität aufweisen, so bedingt der über die Bahn hinwegfahrende Räumschild ein hohes Beschädigungsrisiko, zum Beispiel, wenn bei einseitiger Belastung durch den abgeräumten Schmutz der Räumschild verkantet, und besonders an den Ecken des Schilds mit hoher Spitzenbelastung auf der Unterlage aufliegt. Mit der erfindungsgemäß im Schild vorgesehenen Ausnehmung wird in dieser Situation nicht die darunter liegende Gummibahn belastet, sondern die Räumschildkante und die seitlich neben der Auflage liegende harte Bodenschicht. Damit wird die Lebensdauer der Auflage aus nachgiebigem, elastischem Material beträchtlich vergrößert.

In einer weiteren bevorzugten Ausführungsform sind an dem Räumschild seitlich neben der Auflage aus nachgiebigem elastischem Material Auflageelemente aus hartem widerstandsfähigem Material angeordnet. Die Auflageelemente sind in ihrer Lage am Räumschild und ihrer Dicke an die Breite der Auflage, bzw. deren Dicke angepasst. Da der Räumschild an seinen Enden auf den Auflageelementen aufsitzt und sich beim Gleiten entlang der Auflage auf den Auflageelementen abstützt , ist wiederum ein verbesserter Schutz der Auflage aus nachgiebigem elastischem Material gegen Beschädigung durch den Räumschild, insbesondere bei Verkanten, gewährleistet.

Die Erfindung betrifft weiter ein Räumschild, wobei der Räumschild eine untere Räumkante besitzt, die wenigstens eine, in ihrem Querschnitt im Wesentlichen die Form eines langgestreckten Rechtecks aufweisende Ausnehmung enthält.

Weitere Ausführungsformen gehen aus den beiliegenden Schutzansprüchen hervor.

Nachfolgend wird die Erfindung anhand bevorzugter Ausführungsbeispiele beispielhaft näher erläutert und beschrieben.

In den beiliegenden Zeichnungen zeigen:
- Fig. 1: zeigt eine Übersicht über ein modernes Stallsystem zur Tierhaltung;
- Fig. 2: einen Querschnitt durch eine Bodenform in einem modernen Stallsystem zur Tierhaltung mit einem erfindungsgemäßen Schmutzräumer; und
- Fig. 3: einen weiteren Querschnitt durch eine Bodenform in einem modernen Stallsystem mit einem Schmutzräumer in einer alternativen Ausführungsform.

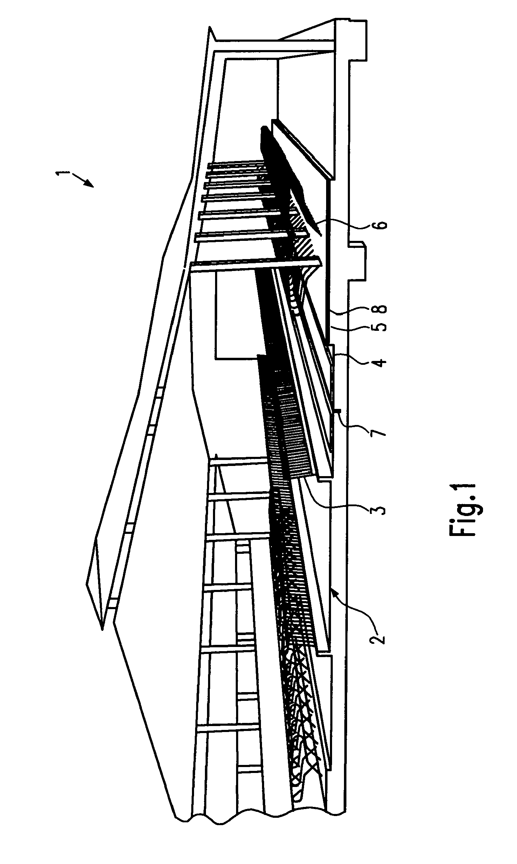

In der Fig. 1 ist schematisch ein Gebäude 1 gezeigt, das als Stallung für die Großtierhaltung dient. Ein Boden des Gebäudes ist in verschiedene Bereich eingeteilt. Zentral ist ein Futterweg 2 vorgesehen, in dem das zur Versorgung der Tiere notwendige Futter ausgebracht werden kann. Beidseitig angrenzend an den Futterweg sind Fressgitter 3 vorhanden, die in bekannter Weise es den Tieren erlauben und vorschreiben, bestimmte Plätze zur Nahrungsaufnahme einzunehmen. Angrenzend folgt ein Laufgang 4, in dem sich die Tiere normalerweise aufhalten und in dem sie in modernen Ställen sich im Wesentlichen frei bewegen können. Innerhalb des Laufgangs 4 ist im Boden ein Spalt 7 angeordnet, der einerseits zur Drainage von Flüssigkeiten in dem Laufgang dient und andererseits auch einen Zugmechanismus für ein Schmutzräumsystem beinhalten kann. Angrenzend an den Laufgang 4 befindet sich ein leicht erhöhter Ruhe- und Liegebereich 5 für die Tiere, in denen die Positionen der einzelnen Tiere durch Trennbügel 6 abgegrenzt sind. Über dem Ruhe- und Liegebereich 5 kann eine weiche Auflage 8 vorgesehen sein. Damit Flüssigkeit aus dem Laufgang 4 wirkungsvoll in den Spalt 7 abfließen kann, ist vorzugsweise der Boden des Laufgangs zu beiden Seiten des Spalts 7 jeweils mit einem leichten Gefälle zur Mitte hin ausgebildet.

Bei einem derartigen Stallsystem bewegen sich die Tiere weitgehend frei innerhalb des Laufgangs 4 und des Liege- und Sitzbereichs 5, und benutzen die Bereiche entsprechend ihrer jeweiligen Bedürfnisse. Zur Nahrungsaufnahme werden die Tiere selbständig in den Laufgang 4 gehen und dort mit durch die Fressgitter gesteckten Köpfen das Futter verzehren, während der Körper, gestützt auf die Beine, im Bereich des Laufgangs 4 verbleibt. Zum anschließenden Verdauen, wie auch zur Ruhe, gehen die Tiere von selbst auf den mit der weichen Auflage 8 gepolsterten Ruhe- und Liegebereich 5.

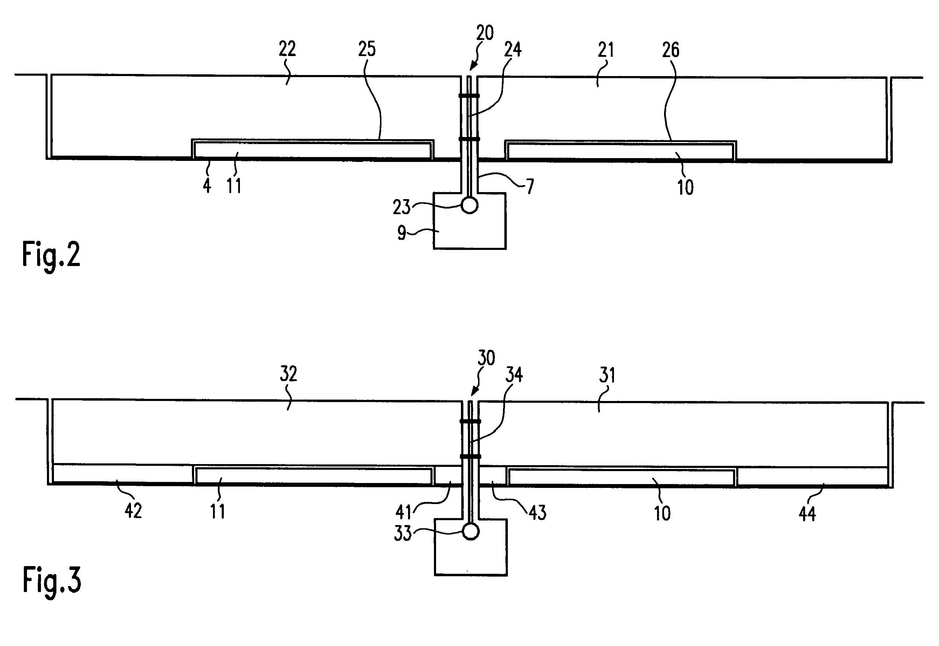

Fig. 2 zeigt eine Querschnittsansicht des Bodensystems im Bereich des Laufgangs 4. Beidseitig zu dem im Boden des Laufgangs 4 angeordneten Entwässerungsspalt 7 sind Auflagen 10, 11 aus nachgiebigem elastischem Material auf dem Boden angebracht. Die Auflagen besitzen beispielsweise jeweils eine Breite von ca. 100 cm und eine Dicke von 15 mm. Die Auflagen sind in Form von Bahnen ausgebildet, die sich im Wesentlichen entlang der gesamten Länge des Laufgangs 4 erstrecken. Die Bahnen können zusätzlich durch (nicht gezeigte) Fixierungssysteme, wie z. B. Verschraubungen, am Boden befestigt sein.

Die Auflagen aus bahnartigem Material sind vorzugsweise aus Gummi hergestellt, der die erforderliche mechanische Trittfestigkeit zur Verwendung in Rinderställen besitzt. Gummi besitzt zudem die vorteilhafte Eigenschaft, dass Verschmutzung nicht in das Material eindringt und relativ leicht durch Abschaben und Abspritzen entfernt werden kann.
Da die Auflage aus Gummi in einer länglichen Bahn angeordnet ist, ist das bisher vorhandene Problem des Verrutschens, bzw. des Aufstehens der Kanten der bisher verwendeten Matten behoben. Da die Auflage in Form einer länglichen Bahn eine verbesserte In-sich-Festigkeit aufweist, reicht ein geringeres Flächengewicht der Auflage aus, um eine gute Befestigung auf dem Boden zu schaffen. Somit ist es möglich, Auflagen mit geringen Dicken, beispielsweise von 10 bis 20 mm, insbesondere von 12 bis 18 mm und bevorzugt von ca. 15 mm, zu verwenden. Durch die verringerte Dicke der Auflagen ist das Problem der Beschädigung der Kanten durch ein weniger häufiges Anstoßen mit den Klauen der Tiere verringert. Die geringere Dicke der Auflage trägt dazu bei, dass die Kanten in sich stabiler sind und einer Belastung durch das hohe Gewicht der Klauen bei Auftreten der Tiere im Randbereich besser widerstehen.

Gummiauflagen können an der Unterseite eine Profilgebung aufweisen , wodurch sie ausreichend weich werden. Das Profil an der Unterseite ist vorzugsweise ca. 5 mm tief. Dadurch entstehen Hohlräume an der Unterseite der Auflage, in denen sich bei unzureichender Spülung Schmutz sammeln wird. Da die erfindungsgemäßen Auflagen eine relativ geringe Dicke aufweisen, tritt beim Betreten durch die Tiere eine Einfederung der Klauen bis auf den Unterboden auf, was zu einer Bewegung der Profilierung relativ zum Boden und damit zu einer einhergehenden "Spülung" unter den Auflagen führt. Im Gegensatz dazu müssen kleinteilige, verzahnte Matten vergleichsweise schwer und damit dick sein. Sie werden dadurch auch steifer, so dass diese Matten im Bodenbereich sich nicht mehr beim Betreten durch die Tiere verformen und es damit zu einer unzureichenden Bewegung und Spülung kommt.

Über dem Laufgang 4 ist ein Schmutzräumer 20 vorgesehen, der zwei Räumschilde 21 und 22 aufweist. Die Räumschilde 21 und 22 erstrecken sich im Wesentlichen über die gesamte Breite des Laufbereichs 4. Mit Hilfe eines in einem unterhalb des Entwässerungsschlitzes 7 angeordneten Kanal 9 angeordneten Zugmechanismus 23, der mittels eines Verbindungsglieds 24 mit den beiden Räumschilden 21 und 22 in Verbindung steht, lassen sich die Räumschilde entlang der Länge des Laufgangs 4 verschieben. Die Räumschilde sind aus massivem Material, vorzugsweise Stahl, ausgebildet, um den von den Tieren hervorgerufenen Schmutz zuverlässig wegzuschieben. Die Räumschilde müssen dabei ein hohes Gewicht aufweisen, damit nicht bei hohem Schmutzanfall die Schilde über den Schmutz hinweggleiten.

Häufig wird ein großer Teil des Gewichts der Räumschilde durch das Verbindungsglied 24 getragen. Die Räumschilde sind in diesem Fall oft nur lose z. B. in Langlöchern, in dem Verbindungsglied eingehängt.

Die beiden Räumschilde 21 und 22 weisen im Bereich der Auflagen entsprechend den Auflagen geformte Ausnehmungen 25 und 26 auf. Damit wirkt das Hauptgewicht der schweren Räumschilde nicht auf den aus nachgiebigem elastischem Material, beispielsweise Gummi, hergestellten Auflagen, sondern es wirkt im Wesentlichen in den seitlich der Ausnehmungen liegenden Randbereichen auf den nicht mit der Auflage versehenen harten Unterboden. Wenn wegen der ungleichmäßigen Verteilung des Schmutzes gegebenenfalls eine einseitige Belastung der zentral geführten Räumschilde auftritt, was leicht zu einem Verkanten der Räumschilde führen kann, wird durch die erfindungsgemäßen Ausnehmungen 25 und 26 im Bereich der Räumschilde keine Beschädigung der Auflagen mehr hervorgerufen. Ein Verkanten der Räumschilde 21 und 21 führt lediglich zu einer erhöhten Punktbelastung in den Eckbereichen der Räumschilde, wo diese auf dem harten Betonuntergrund aufliegen.

Zur zufriedenstellenden Reinigung des Stallung müssen die Räumschilde im Wesentlichen die gesamte Breite des Laufgangs 4 überstreichen. Die Auflagen aus nachgiebigem elastischem Material erstrecken sich jedoch nicht über die gesamte Breite des Laufgangs 4, sondern lassen im gezeigten Beispiel die seitlichen Randbereiche des Laufgangs 4 frei. Es hat sich gezeigt, dass dies in Bezug auf die schonende Tierhaltung und die Verringerung der Krankheitsanfälligkeit der Klauen von Rindem zu keiner praktischen Verschlechterung gegenüber einer ganzflächigen Auskleidung des Laufbereichs 4 mit einem Gummibelag führt. Andererseits hat die erfindungsgemäße Gestaltung den Vorteil, dass Auflagen in bahnartiger Form in Standardbreite von beispielsweise 100 cm verwendet werden können, was eine deutliche Kostenverringerung gegenüber den ansonsten für jede Stallung individuell anzufertigenden Auflagen in Sondermaß darstellt.

Wenn die Auflagen aus relativ weichem Material und vorzugsweise mit einer Profilierung an der Unterseite ausgestattet sind, und sofern der Schmutzräumer noch eine verbleibende Auflagekraft auf die Auflagen ausübt, drücken die Räumschilde beim Verschieben entlang der Auflage darunter befindliches Wasser vor sich her und führen dabei zu einer Spülung und Reinigung unter der Auflage.

In der Fig. 3 ist eine alternative Ausführungsform zu der in der Fig. 2 gezeigten Erfindung dargestellt.

Über dem mit den Auflagen versehenen Stallboden ist wieder ein Räumsystem 30 vorgesehen, das in diesem Fall wiederum aus zwei Räumschilden 31 und 32 besteht, das mittels eines Verbindungsgliedes 34 mit einem Zugsystem 33 verbunden ist. Beidseitig sind an der Unterseite der Räumschilder über deren Unterkante vorstehende Gleitelemente 41, 42, 43 und 44 angebracht, die jeweils aus festem Material, wie Stahl, hergestellt sind. Die Gleitelemente sind so an den Räumschilden angebracht, dass die Auflage zwischen den durch die Gleitelemente gebildeten Ausnehmungen in der Unterkante der Räumschilde liegen. Die Hauptauflagekräfte wirken in dieser Ausführungsform auf den seitlichen Gleitelementen 41 und 42 bzw. 43 und 44 neben den jeweiligen Auflagen 10 und 11. Auch damit ist sichergestellt, dass bei einem eventuellen Verkanten der Räumschilde 31 und 32 mit entsprechend hohem Auflagedruck in den Eckbereichen der Räumschilde es zu keinen Beschädigungen der Auflagen aus nachgiebigem elastischem Gummimaterial kommt.

Die Räumschilde können zur Erzielung eines besseren Abräumergebnisses gegen die Bewegungsrichtung angestellt sein, d. h. die Räumschilde schließen, zumindest teilweise, gegen die Bewegungsrichtung einem von 90° abweichenden Winkel ein. Damit wird eine seitlich zur Bewegungsrichtung wirkende Räumkomponente erzielt, so dass der abgeräumte Schmutz beispielsweise entlang der Bewegungsrichtung in einen gegebenenfalls vorgesehenen seitlichen Kanal (nicht gezeigt) fällt, der separat abgeräumt werden kann. Die seitliche Verschiebung des abzuräumenden Schmutzes geschieht besonders wirkungsvoll, wenn zwei Räumflächen der Räumvorrichtung pflugartig gegeneinander angestellt sind.

## Patentansprüche

1. Bodensystem zur Tierhaltung mit einem tragfähigen starren Boden und wenigstens einer über dem Boden angeordneten länglichen bahnförmigen Auflage aus einem nachgiebigen, elastischen Material.

2. Bodensystem gemäß Anspruch 1, wobei die Auflage aus nachgiebigem, elastischem Material Gummi beinhaltet.

3. Bodensystem nach Anspruch 2, wobei die Dicke der Auflage im Bereich von 10 bis 20 mm, vorzugsweise von 12 bis 18 mm, besonders bevorzugt bei ca. 15 mm, liegt.

4. Bodensystem gemäss Anspruch 1, 2 oder 3, wobei die Auflage auf ihrer Unterseite eine Profilierung aufweist.

5. Bodensystem nach einem der vorhergehenden Ansprüche, weiter mit einem Schmutzräumer mit wenigstens einem Räumschild und einem Bewegungsmechanismus zur Bewegung des Räumschilds entlang der Länge der Auflage.

6. Bodensystem gemäß Anspruch 5, wobei der Räumschild eine Breite aufweist, die größer ist als die Breite der Auflage aus nachgiebigem elastischem Material, und im Bereich über der Auflage eine der Dicke der Auflage entsprechende Ausnehmung zur Aufnahme der Auflage aufweist.

7. Bodensystem nach Anspruch 6, wobei die Ausnehmung durch nach unten vorstehende und in seitlichen Endbereichen der Räumschilde angebrachte Gleitelemente gebildet wird,, an denen der Schmutzräumer bei der Bewegung entlang der Auflage abstützen kann.

8. Bodensystem gemäß einem der vorhergehenden Ansprüche, wobei der Räumschild unter einem von 90° gegenüber der Bewegungsrichtung abweichenden Winkel angestellt ist, zur Erzielung einer Komponente der Räumrichtung in Richtung der Breite der Auflage.

9. Schmutzräumvorrichtung zur Verwendung in einem Bodensystem zur Tierhaltung gemäß einem der Ansprüche 1 bis 5, wobei der Räumschild eine untere Räumkante aufweist, die wenigstens eine, in ihrem Querschnitt im Wesentlichen die Form eines langgestreckten Rechtecks aufweisende Ausnehmung aufweist.

10. Räumschild gemäß Anspruch 9, der zwei pflugartig gegeneinander unter einem Winkel angestellte Räumflächen aufweist.
